# EUROPEAN PATENT SPECIFICATION

(11) **EP 4 468 869 B1**
(45) Date of publication and mention of the grant of the patent: **14.01.2026**
(21) Application number: 23712808.7
(22) Date of filing: 25.01.2023
(51) Int. Cl.: A23P 20/12, A23P 20/18, A23G 3/34, A23G 3/20, A21C 15/00

(54) **COMESTIBLE COATING DELIVERY METHOD AND APPARATUS**
VERFAHREN UND VORRICHTUNG ZUR ABGABE EINER ESSBAREN BESCHICHTUNG
PROCÉDÉ ET APPAREIL DE DISTRIBUTION DE REVÊTEMENT COMESTIBLE

(30) Priority: 25.01.2022 GB 202200961
(43) Date of publication of application: 04.12.2024
(73) Proprietor: Spice Application Systems Limited, Didcot, Oxfordshire OX11 7HR (GB)
(72) Inventor: KING, Peter, Didcot, Oxfordshire OX11 7HR (GB); MARTIN, Anthony, Didcot, Oxfordshire OX11 7HR (GB); ENGLEFIELD, Ian, Didcot, Oxfordshire OX11 7HR (GB); HUGHES-HUBBOLD, Jeremy, Didcot, Oxfordshire OX11 7HR (GB)
(74) Representative: Humphrey-Evans, Edward John
(86) International application number: PCT/EP2023/051840
(87) International publication number: WO 2023/144232

(56) References cited:
- WO-A1-2019/246464
- GB-A- 2 471 014
- US-A1- 2006 147 585
- US-A1- 2011 086 147

## Description

### Field of the Invention

The present invention relates to an improved apparatus and method for delivering a comestible coating substance and more particularly, though not necessarily, to an improved apparatus for delivering a powder coating to disc-like or disc-shaped or products such as rice cakes, potato crisps/chips, crisp/chip-like and shaped dairy products in a manufacturing and/or packaging procedure.

### Background

Snack food products, particularly seasoned snacks chips, are eaten and enjoyed by consumers. For example, potato chips, tortilla chips, corn chips, and the like often include one or more seasonings added to the snack chips after cooking but prior to packaging. To season, snack chips are typically seasoned by sprinkling one or more seasonings onto the surface of the chip products. The surfaces of the chips after seasoning provide a desirable and interesting appearance and immediate flavour to the palate upon consumption. Some common seasonings that consumers prefer, for example, include salt, barbecue flavour, sour cream and onion flavour, vinegar flavour, cheese, and others. Some of these seasonings are hygroscopic and readily absorb oil. There exists a wide variety of products that require to be coated with a substance (e.g. powder, liquid, suspension, etc) during their preparation. It is generally desirable to be able to achieve a uniform and controllable coating over the entire surface of a product. A significant problem with known seasoning systems is that the seasoning is not evenly dispersed over the area of the product. An additional problem occurs where breakage of product occurs through the various processing stages associated with applying seasoning, noting that the likelihood of product breakage increases with size of product.

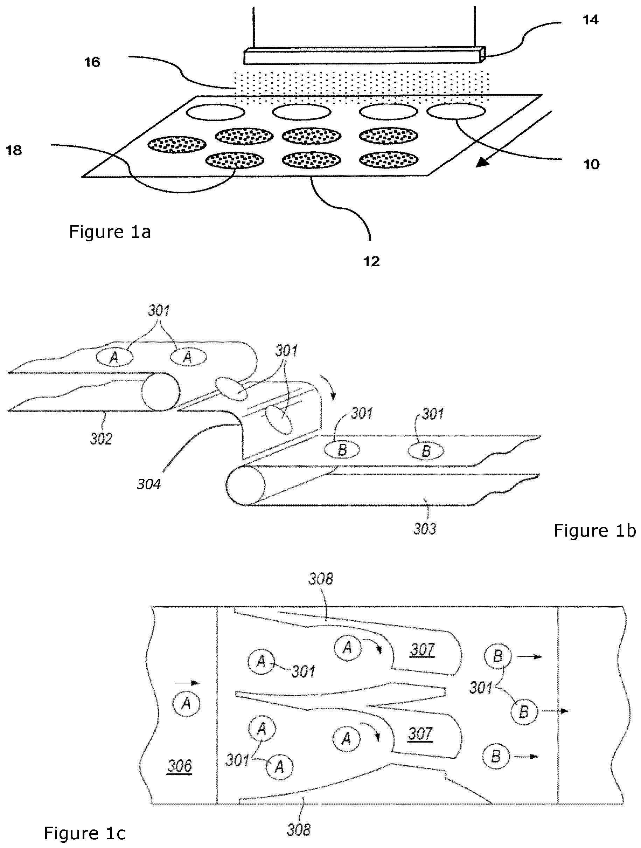

Referring to Figure 1a, an early system is shown which relies upon a gravity feed of powder 16 falling upon a conveyor 12 provided with products 10 to be coated. Immediate problems to be taken into account is ensuring that the powder 16 is coated evenly upon the coated products 18 whist minimizing wastage - although the spacing between product is exaggerated for purposes of clarity. This system shows that only one side of each product can be coated per pass of powder feed unit and subsequent flipping machines are required, noting that dry powder will not necessarily adhere to dry product; an oil spray may be applied. Figures 1b and 1c show alternative methods of flipping product whereby a coating may be applied in two successive processing stages, meaning that processing equipment can comprise many sets of equipment, taking up floor space. In Figure 1b, product 301 having a first surface A is conveyed by way of first conveyor 302, in a first flavour treatment stage, to a flipper edge 304 whereby it can be flipped over such that it exposes a second surface upon a second conveyor 303, whereby a second flavour treatment stage can be performed. In an alternative arrangement, per Figure 1c, a scalloped arrangement 308, 307 acting in a fashion somewhat like a plough share causes product 301 to be flipped from a first side onto a second side, again with two distinct flavour application processes being performed.

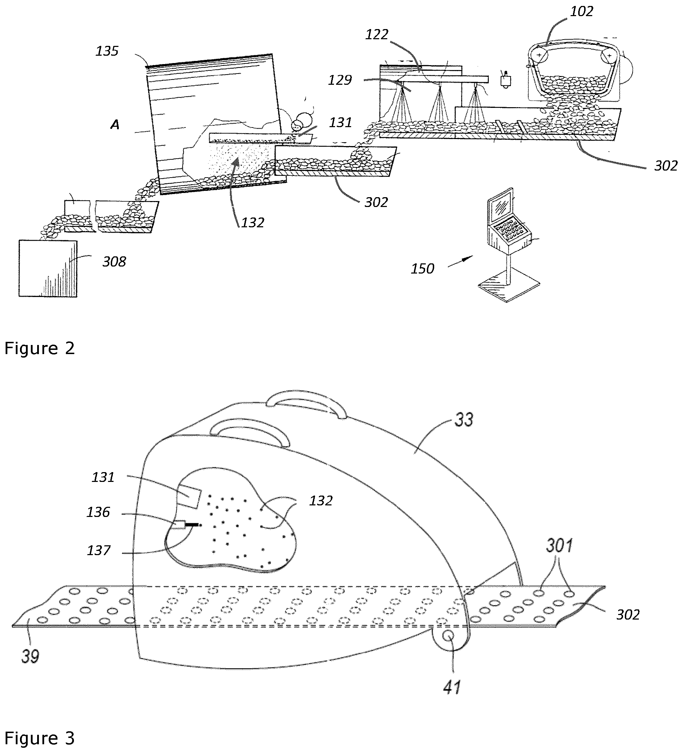

With reference to Figure 2, a prior art drum coating process is shown: A feed hopper 102 delivers product to be coated onto conveyor 302; oil 129 is then applied to the product by way of spray nozzles 122 and agitated in a hope/expectation that oil is coated over at least one surface of a product to be seasoned by way of a tumble as product falls to second conveyor 303 and thence to a rotating drum 35, which rotates about axis A. A vibratory feed system 131 permits seasoning powder 132 to be distributed within the drum as it rotates and provides an opportunity for seasoning to be absorbed by the oil present on the surface of the product, noting that the oil itself will be absorbed by the product. It will be appreciated that control by the process control station 150 must match speed of delivery of the product along the conveyors 302, 303 with the falling product from the hopper; the rotational speed of the drum must match the speed of the conveyors for continuous and consistent seasoning of product, which product is tumbled out of the drum and conveyed to a packaging station 308.

Improvements to this basic system include the use of electrostatics whereby electrostatically charged seasoning powder is delivered within a rotating drum. Given that the drum will be earthed, there is a significant reduction in wastage of seasoning but not eliminating such wastage, given that he systems has open apertures necessary for system overview by operators. Figure 3 shows an electrostatic system in accordance with EP2260717 in the name of applicant company. A hood or enclosure 33 is operably placed in close proximity to a seasoning / coating station above a conveyor 302, with a feed dispenser 131 providing flavouring 132 in the vicinity of an electrode 137 and air feed 136 whereby to minimize any escape of uncharged flavouring, the hood providing a system which reduces atmospheric pollution by the seasoning, reducing the overall amount of wastage, providing a cleaner airspace, requiring less cleaning and thereby reducing operational costs.

GB 2 471 014 A discloses an electrostatic coating device and method. US 2006/147585 A1, WO 2019/246464 A1 and US 2011/086147 A1 disclose coating devices and methods in the food industry.

The skilled addressee will appreciate that throughput of uniformly coated product depends on the correct speeds of input fee, conveying, drum rotation, delivery of oils and seasoning powder. Significantly, the speed of rotation of any drum must be such that product does not break; in contrast, where two separate processing lines are employed, then the product must be tumbled from one conveyor to another without breakage. Equally the oil must be sprayed such that product receives sufficient oil to enable seasoning powder to adhere to oil upon a product surface - yet does not become too greasy and that within the drum the product is exposed to the seasoning powder such that coating of product by powder is even. Furthermore the seasoning must not be applied in an uneven fashion or in localized areas of too great an amount whereby, for example, a consumer will tend to choke or cough, especially when the seasoning is a hot/spicey seasoning.

Notwithstanding the above, there has been an increase in consumption of larger products; large tortilla chips, large corn chips and, in particular, rice cakes - which are typically 9cm (3.5") in diameter, but can be from 5 - 15cm (2 - 6"), typically 7.5 - 10cm (3 - 4") and have various thicknesses - from a couple of 5mm (1/5") to 30mm (1.2") or more. In contrast to the relatively homogenous corn chip and tortilla chip product, rice cakes with individual puffed rice tends to be friable; in a drum, especially since thy tend to have a number of simple upstanding baffle elements or otherwise shaped curved or angled upstanding elements placed to encourage the products to be exposed to flavouring on both sides. Other products such as dairy products, including cheeses arranged as discs, can also be coated with flavourings and spices. Presently, there has been a burgeoning interest in rice cakes; they are seen as a part of a calories controlled diet since even though rice cakes mostly contain carbohydrates, rice cakes are most often made from processed white rice that is considered mostly a source of "empty calories." Additionally, most rice cakes have a high score on the glycaemic index, meaning they can raise blood glucose levels pretty quickly.

In terms of providing or applying flavourings and other comestible additives to large snack food products, it is apparent that present day manufacturing systems for flavouring tend to apply seasoning in an indiscriminate fashion. The powder application material is dispersed and a significant amount is wasted. In a confectionary factory, the powder will find its way between rollers and conveyors and ingress between seals in machinery. The atmosphere of the factory will be saturated with particles and becomes an aerosol environment; personnel will need to wear masks; air conditioning ducts and filters need to be cleaned frequently; the fine particles of the aerosol will settle and plant and machinery need to be cleaned frequently. Importantly, there is significant waste of powder product. Additionally the service intervals for the plant are reduced in time because of the additional load on the machinery (bearing seal ingress, for example) and the need to clean control machinery, which will typically have cooling air systems, having filters that also need to be cleaned or replaced.

### Object to the invention

The present invention seeks to overcome or ameliorate at least some of the disadvantages described above: the present invention seeks to provide a system that can enable a seasoning to be applied to a disc-shaped products in a more uniform fashion than has heretofore been possible. Further, the present invention seeks to provide a system for applying a seasoning agent or powder to snack foods and the like reliably and evenly in confectionary manufacturing environments across multiple parallel production facilities.

### Summary

According to a first aspect of the present invention there is provided an apparatus for delivering an aerosol comestible coating towards a disc-like confectionary product, wherein said disc like confectionary has first and second major surfaces and a perimeter edge surface; said apparatus comprising a conveyor support surface, an electrostatic powder spray unit and an electrostatic coating discharge unit comprising an electrode and coating dispenser; wherein, in use, the conveyor support surface is arranged to provide a support to an edge surface of the confectionary product, the apparatus further comprising at least first and second guides, the guides together with the conveyor defining a channel, the guides either side of the disc-like products cause the disc-like products to be presented in a generally vertical orientation to the electrostatic field; wherein at least one of the conveyor or guides is oppositely charged relative to the electrostatic charge unit; whereby, in use, a single pass of the products though the apparatus is sufficient to enable a substantially uniform application of the electrostatically charged product to the first and second major surfaces of the disc-like product. By reason of the electrostatic application of the powder to an oppositely charged (grounded) vertically oriented disc-like product, aerosol components are attracted to the vertically oriented disc-like product rather than remaining in the atmosphere associated with the processing machine. Since the aerosol application upon both sides of a disc or disc-like product can take place in a single process, it will be appreciated that significant savings in time can be achieved, permitting savings in capital cost and with a commensurate reduction in maintenance issues. Consequential process steps of wrapping can also be facilitated, in view of the vertical orientation of product.

Conveniently, the conveyor has one or more "U"-shaped profiles across a width of conveyor, whereby to assist in the alignment of the product with respect to the conveyor. This can also be employed with certain products, where a reduced number of guides are required to ensure disc-like products are presented in a generally vertical orientation.

The principle of the present invention can be applied to many application systems and more products can be applied to a conveyor; for example a conveyor for a single horizontally arrange snack product can be adapted to provide two, three or more vertically oriented snack products. Conveniently, the conveyor is generally horizontally disposed and there are at least three guides provided to ensure disc-like products are presented in a vertical orientation.

Conveniently, the conveyor support surface comprises one or more of a wire-link conveyor, conductive conveyor belt, wire belt or inclined vibratory surface. Where the conveyor is of a general belt form, and is arranged to support products on a top surface, a conveyor cleaning apparatus can be provided, below the top surface.

The product to be processed can be one of a rice cakes, potato crisps/chips and crisp/chip-like products or other similar products, including tablets. Typically the products are dry and will not readily associate themselves with dry seasoning or flavouring and an oil is required to be electrostatically applied in a first stage, followed by the application of the powder within a period of time before the oil has been absorbed.

The electrostatic aerosol assembly is conveniently installed upon a frame which is mounted above a conveyor section and supports one or more electrostatic aerosol devices. Conveniently, a system comprising a series of apparatus can be provided. Conveniently, the products are uniformly aligned in rows and each row passes under a particular electrostatic device with the width of the electrostatic spray coating tailored to match the width of the product. Whilst several product support guides can be provided in a parallel spaced apart arrangement, the conveyor may provide only one product support guide, dependent upon a desired throughput of coated product. Conveniently, there are a plurality of powder-jet and electrode assemblies, each powder-jet and electrode assembly covering a particular width of the conveyor.

The rate of powder coverage deposited per unit area can be varied with regard to powder feed rate to powder-jet assembly

Typically, the width of a conveyor in these manufacturing systems maybe as small as 40cm but may extend to 2m or more.

In accordance with a further aspect of the invention, there is further provided an orientation inverter funnel, the funnel being operably arranged to receive horizontally arranged disc-shaped product, the inverter funnel comprising an inlet and an exit, wherein the inlet connects to the exit via a gravity chute and comprises a horizontal aperture having a width and a length, the width and length being greater than corresponding dimensions of the disc shaped product, the horizontal aperture having a width, the aperture being arranged such that it has an incline across its width whereby to operably cause a disc-like product to change orientation as it passes therethrough, through the chute whereby to orient itself in a vertical orientation at the exit, the exit being dimensioned such that it has a channel width sufficient to maintain the vertical orientation, with a channel height to permit free rolling or sliding passage of the disc-like product. Conveniently, the exit of the chute is associated with the guide elements, operably arranged to ensure the disc-like products remain in a vertical orientation to the electrostatic field. The guide elements can comprise first and second fastening elements which define a general "U"-shaped support along the conveyor from a first end to a second end.

Preferably, the guide elements are electrically conductive and can comprise one of metallic strips or metallic wires, operably arrange to support the product in a vertical orientation. The orientation inverter assembly can be provided with aperture side members which are operably arranged so as to guide disc-shaped product into the chute. The apparatus can be arranged such that associated with the aperture is a guide arranged to ensure that disc product received from is guided to a side of the chute where it is inclined to a greater degree.

In accordance with a further aspect of the invention, there is further provided an exit orientation inverter chute, the chute being operably arranged to receive vertically oriented disc-shaped product, the chute comprising an inlet aperture and an exit, with a side wall either side of the aperture, wherein the inlet connects to the exit via a gravity chute and comprises a vertical aperture having a width and a height, the width increasing along the chute and the height of the side walls reducing, and the chute being shaped so as to permit the disc-shaped product to lean against a side wall proximate the aperture and change orientation as it traverses the chute towards the exit, where the exit mouth is wider that the disc-shaped product, to permit the product to be presented in a horizontal orientation.

The exit of the chute can be arranged such that it is coaxial with the aperture of the chute, although it is preferably curved, whereby product can be directed either side of the conveyor. It is believed that the curvature assists in the change of orientation since the upper edge of the disc-like product is urged against the sides, assisting in the change of orientation.

The present invention is applicable in particular to the coating of generally disc-shaped confectionary products which require seasoning. However, the product class can be one of articles of food for human or animal consumption and pharmaceuticals. Animal products, include such products as dog biscuits as well as other animal foodstuffs.

### Brief Description of the Drawings

Some preferred embodiments of the invention will now be described, by way of example, with reference to the accompanying drawings, wherein:
Figure 1a illustrates a known gravity feed coating delivery apparatus;
Figures 1b and 1c show two alternative forms of flipping comestible products for coating on first and second sides of product;
Figure 2 shows a drum coating system for coating products with a seasoning after an oil spray;
Figure 3 show a hood operable to provide a localised electrostatic coating atmosphere for product placed upon a conveyor;
Figure 4 shows a system in accordance with the present invention albeit not showing a feed system;
Figure 4a details a drive mechanism for an earthed conveyor in accordance with an aspect of the invention;
Figure 5 details a first product orientation feed mechanism in accordance with an aspect of the invention;
Figure 6 shows an introductory load conveyor suitable for use with a system in accordance with an aspect of the invention;
Figure 7 shows a detailed view of product upon the introductory load conveyor of Figure 6;
Figure 8 shows a view of product approaching a product orientation feed mechanism of the invention;
Figure 9 shows an output conveyor showing disc-like product being oriented vertically following receipt of seasoning on each side;
Figures 9a and 9b show a sectional view through an aerosol spray hood;
Figure 9c details an electrostatic feed nozzle; and,
Figures 10a and 10b show side and overhead views of an output system in accordance with an aspect of the invention.

### Detailed Description of the Preferred Embodiments

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

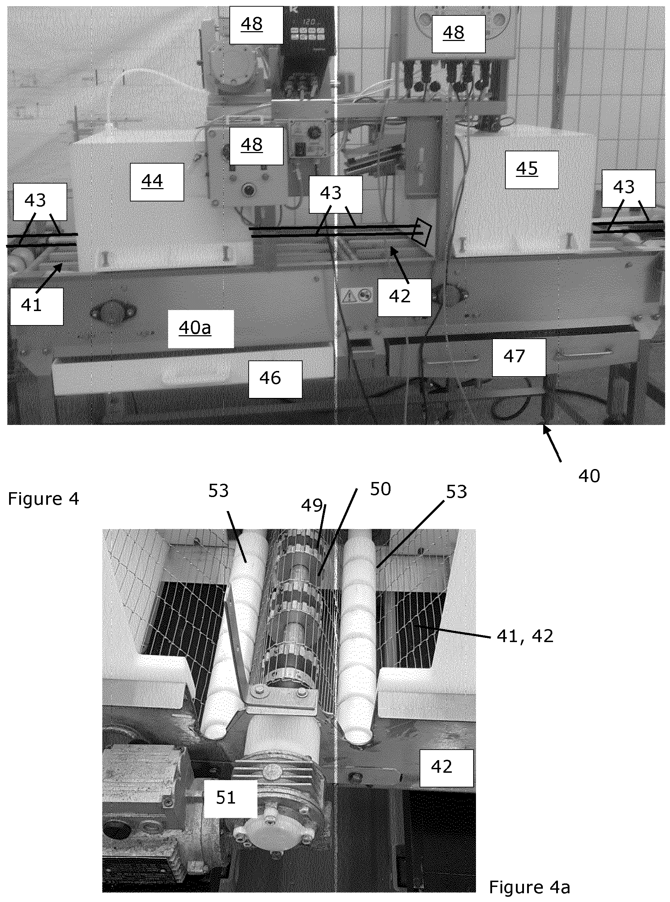

Referring now to Figure 4, there is shown a simplified view of an electrostatic coating machine 40 for snacks and the like in accordance with the invention, albeit without a feeder and product collector in place, to indicate the main spray-features of the system. Nonetheless, product to be coated is received on the left hand side of the first conveyor 41 via the feeder and is passed through a first electrostatic spray unit 44 - where oil is sprayed upon product and via a second conveyor 42 is passed through a second electrostatic spray unit 44 - where seasoning and/or colour is sprayed upon product. The electrostatic spray unit can include a feed dispenser providing flavouring in the vicinity of a high voltage electrode and air feed similar, to that shown in Figure 3 (and as taught in EP2260717 in the name of applicant company. The hood or enclosures of the spray units 44, 45 are operably placed in close proximity to the conveyor 41 to minimize losses of oil and comestible product. It will be appreciated that certain types of food product have their own oily / greasy exterior surfaces such that they do not need any oil spray prior to the application of a comestible powder, which when upon deposition is absorbed into such oily / greasy surface of the food product.

Guide elements 43 are placed above the conveyors 41, 42, and are arranged to support product and constrain passage of product through the equipment, noting that typical disc like product will typically be generally circular in shape, but some planar chips may be square, rectangular, triangular or other shapes. Below first hood and conveyor 41 there is a waste product collector 46 - for the oil, for recycling and disposal and below second hood 45 and conveyor 42 there is a waste product collector 47 - for the seasoning and / or colouring (hereinafter to referred to as "seasoning"). This facilitates re-use and appropriate recycling of the separate products, noting that it is possible to have a single enclosure to support the oil and seasoning, but collection of waste product is complicated; moreover by having separate conveyors, the separate conveyor mechanisms are each easier to clean - in part because they become less congealed. Control elements 48 control the speed of the conveyors, pumping of the oil, delivery of aerosol assist gas and delivery of the seasoning.

As is well known, the oil is sprayed at high pressure to form a mist in the presence of an electrostatic discharge electrode to provide a charge to the oil; the comestible product to be coated absorbs the oil and whilst the oil is being absorbed, the seasoning is absorbed with the oil. It will be appreciated that there is a finite time for the absorption to occur and the distance between adjacent spray hoods is maintained at a minimal distance and the speed of transferring product from oil application to seasoning application is controlled to ensure maximal retention of seasoning. As is also known, certain comestible products have a sufficient adherence to a particular form of seasoning whereby the oil application is not necessarily required.

Figure 4a shows a drive mechanism for a conveyor 41, 42, situated below a waste collector tray 46, 47. The conveyor belt is formed from interlocking stainless steel wire, conveniently of a 316 grade, which is commonly referred to a marine grade, which can be easily cleaned. In the manufacture of equipment for production and processing of food, metal components are preferred: in the event of breakage wear or similar, parts can be located using simple metal detecting equipment; plastic parts on the other hand are far more difficult to identify and their use is discouraged, especially on food-product system contact/wear surfaces, given that particles of micro-plastics will be generated having arisen from such contact, over time. Nonetheless, with regard to the wire belt that is typically used - noting that national food preparation regulations often mandate the use of stainless steel; preferably the stainless steel is ferromagnetic, whereby failure systems can magnetically identify debris.

A motor and reduction drive system 49 causes drive spindle 50 to rotate. The castellated drive gears 51 engage with the wires of the conveyor and cause the conveyor to operate in the desired direction. Spindles 53 are placed to ensure that the tension of the conveyor is maintained. POM (PolyOxyMethylene) plastic, otherwise known as Acetal is a preferred for light loads, where the operating temperature range is limited to between -20°C to +80°C, and is also FDA approved for food processing applications. Another commonly used material is PolyEtherEther-Ketone (PEEK) a high performance engineering thermoplastic that can operate at high temperatures and is less abrasive on stainless steel belts than metal drive components. PEEK can be used continuously to 250°C and in hot water or steam without permanent loss in physical properties. These plastics can also be employed as support material for the underside of the conveyor, to provide a generally flat surface Although not shown, a conveyor cleaning system can be provided to remove excess oil and powder that will be attracted to the conveyor, and is conveniently placed below the product and electrostatic assemblies.

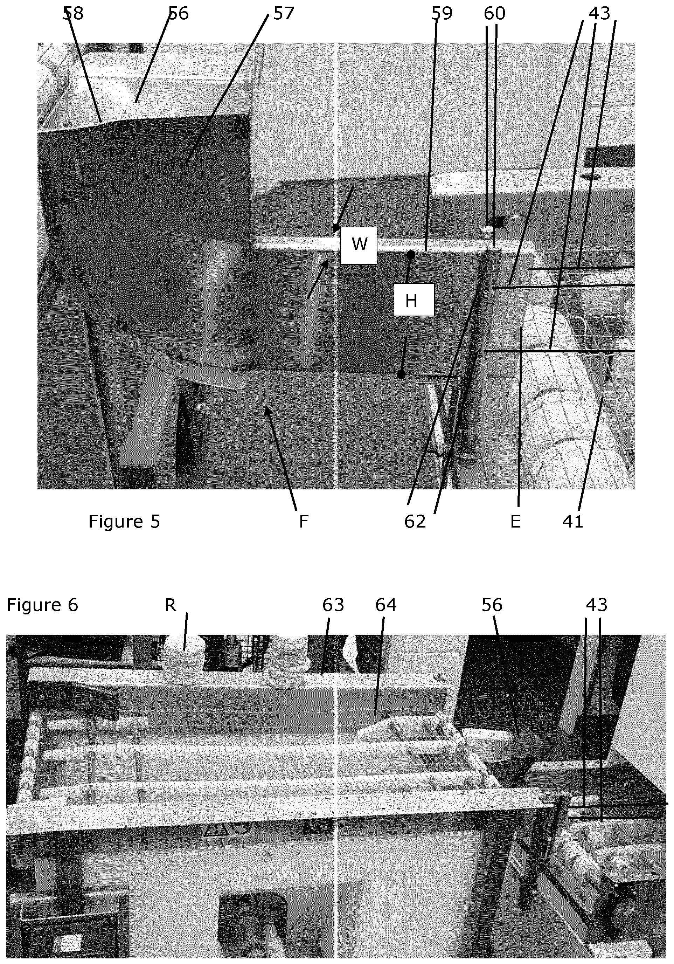

Referring now to Figure 5, there is shown a feeder F for the product being generally disc-shaped - i.e. having a circumference far greater than a thickness between two generally planar sides. The feeder F, has an funnel-like entrance 56 and, in this case, has an inclined chute side element 57 extending to an perimeter edge 58, which perimeter edge extends such that product coming in from, for example, a generally horizontal input feed is positively introduced into the feeder, such that the orientation of the disc-shaped product is change for from substantially horizontal disposition to a substantially vertical disposition, exiting via exit, E. The exit, E, has dimensions determined by the chute 59 and has a height H and a width W, sufficient to permit product to roll or at least slide from the entrance of the towards the exit. Where a machine is employed for applying coatings to different shapes and types of product, then different feeders will be necessary. A guide element may be placed above conveyor 64, towards the end of the conveyor and proximate the funnel-like entrance 56 whereby to provide a degree of off-axis momentum to assist in the product sliding toward a particular slide of the entrance, whereby to permit a simple horizontal to vertical orientation of the disc product R.

Upon products exiting from the chute, then the products shall be retained in a generally vertical orientation by means of guide wires 43 which are simply retained within upstanding support posts 60, which support post can be provided with apertures 62 through which the wires can be attached, the wire-ends conveniently being twisted about the post or otherwise clamped to ensure that they remain fastened. Alternatively, the wires could be retained via cleats, knurled sections or otherwise, but the provision of a drilled-through aperture 62 is a simple and reliable method of fastening. Once again, it is preferable to use wires as such rather than plastics twine such as nylon, for example, more preferably the wires are manufactured from a suitable grade of stainless steel. The wires need to be of a sufficient gauge with diameters of 1 - 3.25mm corresponding to British standard wire gauge (SWG) 19 - 10; given that the wire is primarily used a support to hold product vertical, significant forces are unlikely to arise, but a proper selection, installation and maintenance of the guide wires 43 will pay off in a substantial reduction of unscheduled down time. Whilst various supports could additionally be supplied, this has not been found to be necessary; moreover the system of having tensioned guide wires 43 from a feed end of a conveyor to a process end of the conveyor is simple to install. It has been found to be necessary to have the guide wires 43 closely coupled to an exit E of the feeder chute and to be separated, ideally, by less than twice the width of product, whereby untoward parallel grouping of disc product in transit upon the conveyor is prevented.

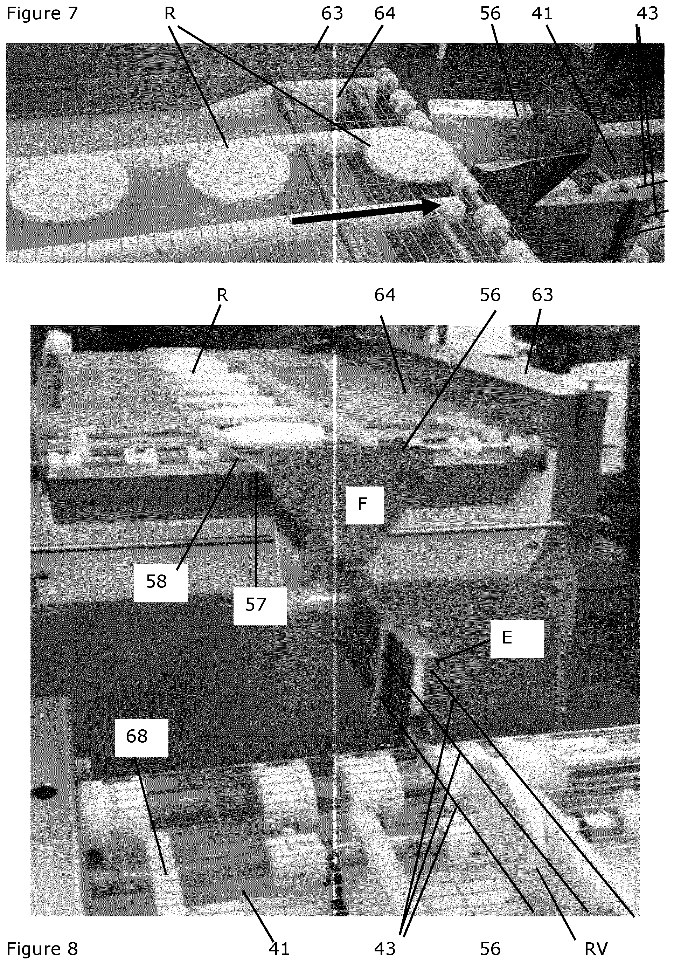

Figure 6 is similar to Figure 5, but also shows an input conveyor system 63 with a conveyor 64 ready to transport product such as rice cake, R, shown resting upon a side member of conveyor system 63. Feeder or funnel-like entrance 56 has its aperture just below the level of the conveyor 64, whereby the conveyor together with gravity enable product to move / roll / slide through the funnel, whereby to be guided in a vertical orientation once exited and being moved upon and grounded by stainless steel conveyor 41. Figure 7 show a closer view with rice cake product R approaching the entrance to the funnel F in the direction indicated by the arrow. Conveniently, product that is misplaced axially with respect to feeder is guided such that it is directed towards the funnel (but this might cause interference with correctly placed product) or otherwise be permitted to fall off or guided so that it can be caught by a waste product management system such that it does not interfere with other product correctly positioned in subsequent/downstream processes.

Referring now to Figure 8, there is shown a production run of rice cakes R, upon a conveyor 64, approaching feeder F and exiting via exit E of feeder F upon conveyor 41 of the electrostatic system. The leading edge of the enclosures or hoods 44, 45 are conveniently castellated to permit entry of vertically oriented product RV and permit the guide elements 43 above the conveyors 41, 42 to remain upstanding once the cover 44, 45 is lowered. The particular hoods or enclosures shown in this Figure can be raised vertically - and are located by means of apertures permitting upstanding elements to locate therewith; with reference to Figure 3 the hood 33 is pivotably fastened to a frame (not shown by means of pivot / hinge 41). It will be appreciate that the conveyor 41, 42 will transport the vertically oriented product RV sequentially through the oil and seasoning electrostatic enclosures sliding with respect to the guide elements 43. As briefly mentioned above, the guide elements are conveniently stainless steel wire which is easy to source and put in position. An example of a conveyor support 68 as discussed above is shown. These are typically elongate runners which extend between the two ends of the belt, to define a generally flat support surface, albeit a change in inclination to or from a separate feed or collection bin may require that the conveyor is not necessarily horizontal flat across its total length. However, other metals could be employed; strip metal could also be employed, but would reduce the available surface to be coated, both with oil mist and seasoning. Were it not for food grade regulations, other materials could be employed, as would be known to the skilled person. For a substantially flat mesh conveyor, it is prudent to have at least three horizontal guide wires 43 attached to guide support elements 60 - although it could be possible by having a lowered mesh portion to provide a channel into which for location of a circumferential edge of a rice cake or other product, which would require only two horizontal guides. Notwithstanding the above, the rice cake in a vertical orientation RV is shown upstanding whereby, in the electrostatic oil spray mist and subsequent seasoning mist, the whole surface are of the product is available to absorb the oil and then the seasoning in one procedure, rather than being coated upon one upside face when lying upon a conveyor, being flipped and then coated upon a second major face of product, noting that alternatives such as drum processing are known not to prevent damage to, in particular, large friable snack products such as rice cakes.

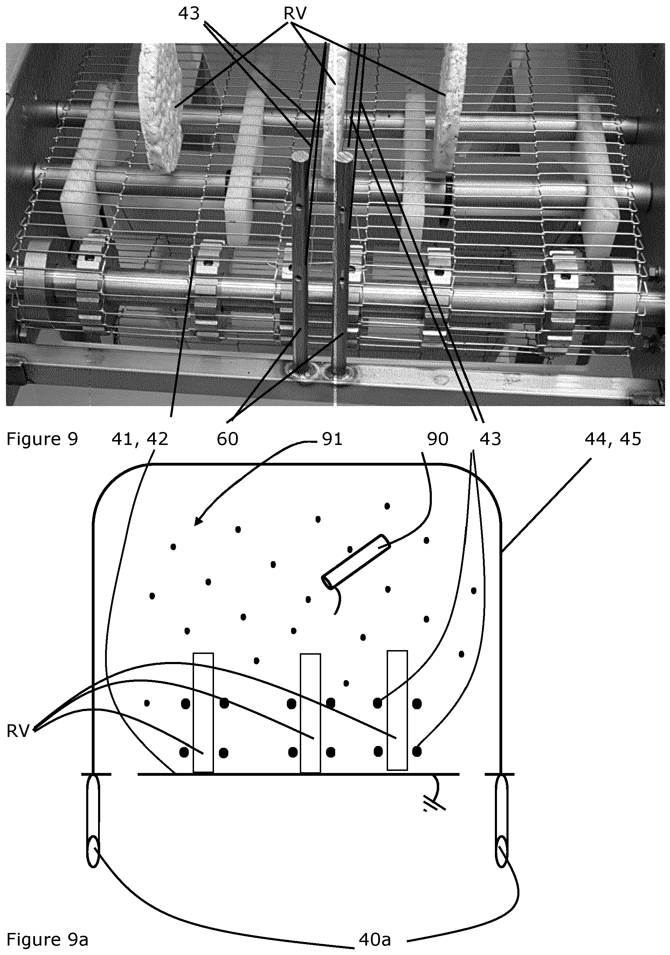

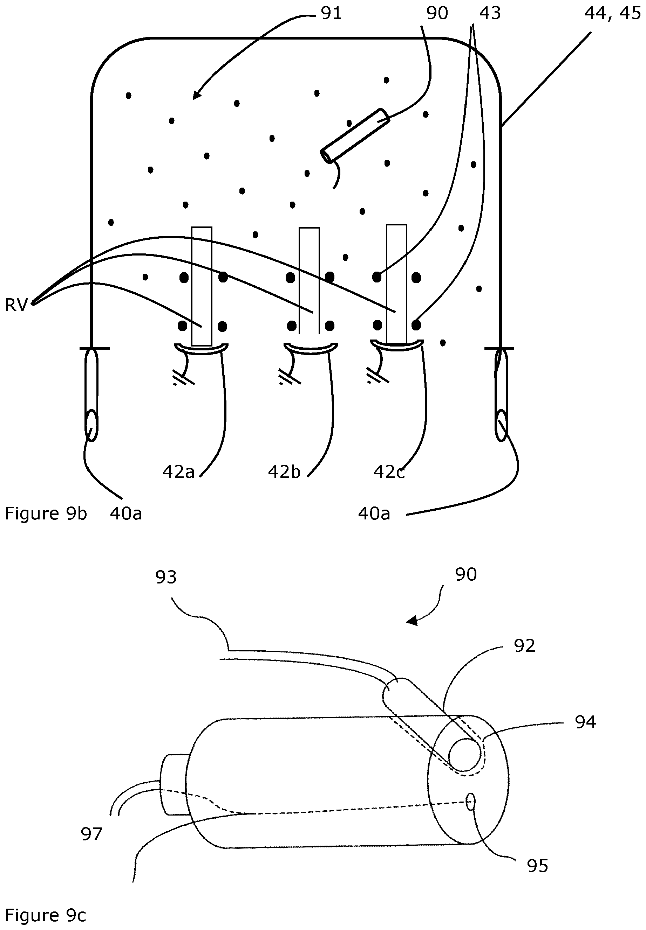

Figure 9 shows products arriving from an electrostatic seasoning enclosure 45 and guide support post 60 support two guide wires 43 placed either side of rice cake RV (noting that the two outer rice cakes are shown in a representative fashion given that system is only provide with one guiding system). Nonetheless, it will be appreciated that this system having a thirty centimetre wide conveyor 42 can accommodate an input of three lanes of input rice cake to be flipped and subsequently coated with oil mist and then seasoning. Indeed, it would be possible to have the output guiding posts converge to assist in subsequent packaging units in a food product factory.

Figure 9a shows how products can be arranged upon a conveyor 41, 42 under a hood or cover 44, 45, placed upon an upper perimeter frame part of the machine 40a, with an electrostatic aerosol spray system 90, which generates an electrostatically charged aerosol atmosphere 91. The electrostatically charged aerosol constituents are attracted to the upstanding product, which is grounded (i.e. is at an opposite charge to the aerosol) by way of contact with the conveyor and, the electrically grounded guide wires 43. As discussed above the aerosol is initially formed using an edible oil - rapeseed, olive oil etc, oil, and then, subsequently seasoning powder. Again, as discussed above the oil and powder can be applied in distinct areas or over the same hood or cover 44, 45. It will be realized that the upstanding products RV expose substantially all their external surfaces to the aerosol atmosphere, whereby only one pass through the electrostatic oil/powder processing area is necessary - with due regard to the rate of passage of product, the ability of the product to absorb oil and other normal processing conditions to be taken in to account, known to the skilled addressee. Figure 9b shows a similar arrangement, except that instead of having a single conveyor 92, there are three narrow "U-shaped" conveyors. By the provision of a narrow, "U-shaped" conveyor there is no necessity to have three (or more) guide wires to ensure that the product remains vertically oriented, since the base conveyor portion ensures that the perimeter or circumference of the product remains in place and in contact with the grounded conveyor 42a, 42b & 42c. In an alternative, the profile of a single conveyor, across its width, is such that there are three channels defined to assist in a positive holding of the base of the disc product.

Figure 9c details a suitable type of electrostatic aerosol assembly, for use in the present system. With reference to Figure 4 above, there is generally shown - and located with drive machinery and controls therefor - is a hopper and storage item for oil and powder coating 48 which feed products to be provided to the respective electrostatic aerosol assemblies. The electrostatic aerosol assembly 90 comprises a single moulded piece of plastics material, having a generally cylindrical passage 92 passing therethrough, close to a distal end of the assembly 90. The passage 92 is designed to receive a complimentary shaped and sized nozzle 94 which, once inserted into the passage 42, can be secured therein with a screw, clip, or similar fastening. Feed tube 93 receives aerosol oil/powder feed from hopper and storage items 48 referred to above.

Fixed into the assembly 90 is a short needle electrode 95, located in the passage just beneath the mouth of the nozzle 94. The electrode 95 is coupled via a conductor 96 to a high voltage charging circuit (for example a cascade arrangement). In use, the electrode is charged up to a voltage of around 85KV. An end of the nozzle 94 is coupled via a hose 97 to a source of pressurised air (not shown in the figures). The nozzle mounting and the various components attached thereto are designed to withstand the high ambient levels of heat and moisture, and to be suitable for use on a food production line. A suitable control unit is used to control the pressure of air supplied to the nozzle and the voltage applied to the electrode.

It will be appreciated, that the above electrode arrangement is but one of many types of electrode that can be employed. The gas supply and powder feed may be separate from a needle electrode assembly. The electrode could be placed within a gas-powder supply, although such a system could well be subject to maintenance problems. Functions of the powder spray gun are to shape and direct the flow of powder; to control the pattern size, shape and density of powder spray. Accordingly the speed of gas flow, nozzle shape and size will affect distribution pattern or fan shape of product.

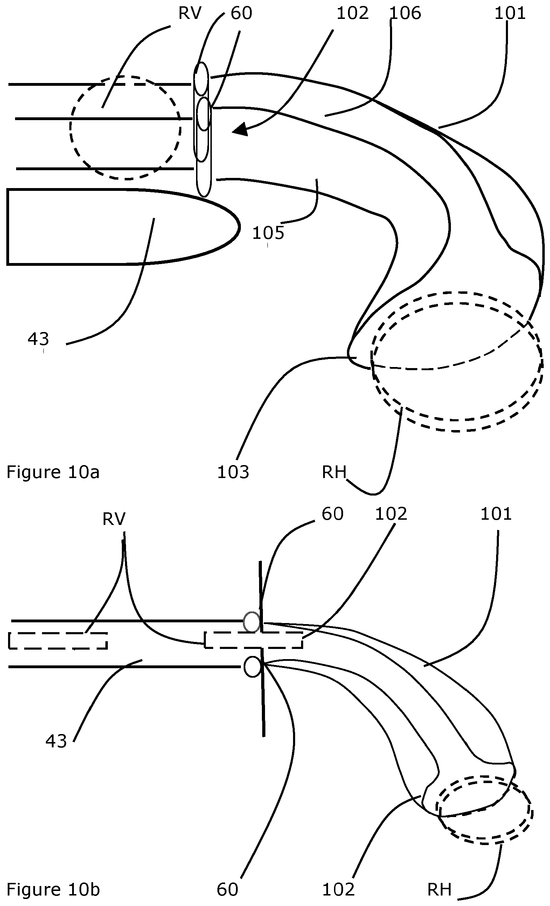

Figures 10a and 10b, show, respectively side and overhead views of the exit chute of the coating apparatus. After the coating process has taken place and product reaches the end of conveyor 43, the coated product remains upright, as ensured by the guide wires. Once past the guide posts 60 in accordance with a preferred embodiment, the coated product is introduced into a chute 101, having an aperture 102, vertically oriented in correspondence with product. Sidewalls 105, 106 reduce in height as the chute become wider along the path to the exit. The sidewalls curve so as to encourage the disc-like product to lean against one; as the width of the base of floor of the chute increases, the orientation of the disc-like product changes and the disc-like product approaches a horizontal orientation, as it approaches the exit mouth 103 of the chute 101, whereby at the exit, the major faces of the product being horizontal RH. It will be appreciated that this gentle arrangement enables the rice cakes to be further packaged in accordance with manufacturers preferred system, without damage from being dropped into a catchment container or similar. It will be appreciated that the dimensions of the chute will correspond with the dimensions of the product to be coated. As will also be appreciated, the chute is conveniently be manufactured from a suitable material such as 302 or 316 grade stainless steel.

It should be taken into account that as the product is seasoned, it may be necessary to operate successive conveyors at higher horizontal speeds, with the conveyors being timed to co-operate to avoid localized accumulations of product.

The conveyors are grounded so that, in operation, charged powders are attracted to the products, grounded therethrough. The conveyors are conveniently grounded by means of a rolling ground contact in contact with the conveyor as it moves, noting that a resiliently mounted metallic braid or similar would ensure contact to earth, as are known for conveyor products and as such are readily available items as mechanical parts; as will be appreciated plant, covers etc are always grounded in manufacturing systems. It has been found convenient to use so called wire belt conveyors with an open construction to ensure efficient coating operation with no "bald patches" arising from contact where product is supported by a continuous conductive rubber belt (which may not be permitted for food use in any event by national legislation) or more densely arranged wire belt conveyors. In addition, an open construction can assist in simplifying cleaning operations. A further benefit arising from the use of a wire belt is that depressions can be created to assist in locating product; additionally regularly spaced upstanding wires can assist in ensuring movement of product, in the event that a disc product has little weight, or when a factory arrangement determines that part of a conveying process is performed about an incline, not necessarily in the coating deposition areas.

As will be appreciated, by the use of hoods or enclosures about the electrostatic spray product areas release of powder in the atmosphere of the factory is limited negating the need for expensive specific air conditioning units with filters will not be necessary.

By the use of a minimum amount of powder, which in use is electrostatically attracted to product to be coated, wastage is minimal; aerosol powders will not readily enter the atmosphere surrounding the equipment, thereby considerably improving the working environment for personnel. By having reduced wastage, then equipment will be easier to maintain, again reducing downtime.

Non-limiting examples of suitable confectionery materials that are non-flowable whole potato / vegetable slices or formed carbohydrates crisps, cookies, rice cakes and cheeses. Colouring may be added to the confectionery substrate as desired. The confectionery material may also include a pharmaceutical product or a medicament. This is of considerable advantage in the field of logistics and distribution. Equally this is of advantage in retail where or sweets, candies and the like are identical and where any flavours are applied by dusting, such favouring is dispersed uniformly across the product.

The disc-like product funnel / feed, vertical orientation techniques and exit arrangements and electrostatic powder feeder apparatus in accordance with the present invention can be retrospectively fitted to known conveyor systems, whereby to improve the uniformity of coating of product.

## Claims

1. An apparatus (40) for delivering an aerosol comestible coating towards a disc-like confectionary product, wherein said disc like confectionary has first and second major surfaces and a perimeter edge surface;
said apparatus comprising a conveyor support surface (41, 42), an electrostatic powder spray unit (44, 45) and an electrostatic coating discharge unit comprising an electrode and coating dispenser;
wherein, in use, the conveyor support surface is arranged to provide a support to an edge surface of the confectionary product, the apparatus further comprising at least first and second guides, the guides together with the conveyor defining a channel, the guides either side of the disc-like products cause the disc-like products to be presented in a vertical orientation to the electrostatic field;
wherein at least one of the conveyor or guides is oppositely charged relative to the electrostatic charge unit;
whereby, in use, a single pass of the products though the apparatus is sufficient to enable a substantially uniform application of the electrostatically charged product to the first and second major surfaces of said disc-like product.

2. An apparatus according to claim 1, wherein the conveyor has a "U"-shaped profile, whereby to assist in alignment of the product with respect to the conveyor.

3. An apparatus according to claim 1, wherein the conveyor is generally horizontally disposed and there are at least three guides provided to ensure disc-like products are presented in a vertical orientation.

4. An apparatus according to claim 1, wherein the guides comprise continuous elongate members above the conveyor, in correspondence with the operational length of the conveyor.

5. An apparatus according to claim 1, wherein the conveyor support surface comprises one or more of a conveyor belt, wire belt or inclined vibratory surface.

6. A system comprising a series of apparatus in accordance with any one of claims 1 - 5.

7. An apparatus or system according to any one of claims 1 - 6, wherein the electrostatic product spray unit comprises an electrostatic aerosol device, which aerosol device has an outlet mounted for providing a localized atmosphere of electrostatically charged reciprocating motion before the roller (22), wherein a raster pattern of distribution of powder upon the roller (22) can be provided.

8. An apparatus or system according to claim 7 wherein there are a plurality of powder-jet and electrode assemblies, each powder-jet and electrode assembly covering particular width of the roller (22), optionally mounted upon a sub-frame for movement.

9. An apparatus or system according to anyone of claims 1 - 8 further comprising an orientation inverter funnel, the funnel being operably arranged to receive horizontally arranged disc-shaped product (RH), the inverter funnel comprising an inlet (56) and an exit (E);
Wherein the inlet connects to the exit via a gravity chute and comprises a horizontal aperture having a width and a length, the width and length being greater than corresponding dimensions of the disc shaped product, the horizontal aperture having a width, the aperture being arranged such that it has an incline across its width whereby to operably cause a disc-like product to change orientation as it passes therethrough, through the chute whereby to orient itself in a vertical orientation (RV) at the exit, the exit being dimensioned such that it has a channel width sufficient to maintain the vertical orientation, with a channel height to permit free rolling or sliding passage of the disc-like product.

10. An apparatus or system according to claim 9, wherein the exit of the chute is associated with guide elements, operably arranged to ensure the disc-like products remain in a vertical orientation to the electrostatic field, the guide elements optionally being electrically conductive.

11. An apparatus or system according to claim 10, wherein guide elements comprise first and second fastening elements which define a general "U"-shaped support along the conveyor from a first end to a second end.

12. An apparatus or system according to claim 10 or 11, wherein the orientation inverter funnel F, is provided with side members which are operably arranged so as to guide disc-shaped product into the chute.

13. An apparatus or system according to anyone of claims 1 - 12, further comprising an exit orientation inverter chute (101), the chute being operably arranged to receive vertically oriented disc-shaped product (RV), the exit orientation inverter chute comprising an inlet aperture (102) and an exit (103), with a side wall either side of the aperture,
Wherein the inlet connects to the exit via a gravity chute and comprises a vertical aperture having a width and a height, the width increasing along the chute and the height of the side walls reducing, and the chute being shaped so as to permit the disc-shaped product to lean against a side wall proximate the aperture and change orientation as it traverses the chute towards the exit, where the exit mouth is wider that the disc-shaped product, to permit the product to be presented in a horizontal orientation.

14. An apparatus according to claim 13, wherein the exit of the exit orientation inverter chute (101) is coaxial with the aperture of the exit orientation inverter chute (101) or wherein the exit orientation inverter chute (101) is curved, whereby product can be directed either side of the conveyor.

15. A method of operating an apparatus (40) according to any one of claims 1 - 14, for delivering an aerosol comestible coating towards a disc-like confectionary product, wherein said disc like confectionary has first and second major surfaces and a perimeter edge surface;
said apparatus comprising a conveyor support surface (41, 42), an electrostatic powder spray unit (44, 45) and an electrostatic coating discharge unit comprising an electrode and coating dispenser;
the method including the following steps:
conveying said disc like confectionary upon the conveyor support surface, wherein the conveyor support surface provides support to an edge surface of the confectionary product, the at least first and second guides, together with the conveyor support surface defining a channel, the guides either side of the disc-like products cause the disc-like products to be presented in a vertical orientation to the electrostatic field;
wherein at least one of the conveyor or guides is oppositely charged relative to the electrostatic charge unit;
whereby, in use, a single pass of the products though the apparatus is sufficient to enable a substantially uniform application of the electrostatically charged product to the first and second major surfaces of said disc-like product.

## Patentansprüche

1. Vorrichtung (40) zum Auftragen einer essbaren Aerosolbeschichtung auf ein scheibenartiges Süßwarenprodukt, wobei das scheibenartige Süßwarenprodukt eine erste und zweite größere Oberfläche und eine Umfangsrandfläche aufweist;
die Vorrichtung umfasst eine Förderbandauflagefläche (41, 42), eine elektrostatische Pulversprüheinheit (44, 45) und eine elektrostatische Beschichtungsausgabeeinheit, die eine Elektrode und eine Beschichtungsausgabe umfasst;
wobei die Förderbandauflagefläche im Einsatz so angeordnet ist, dass sie eine Auflage für eine Randfläche des Süßwarenprodukts bereitstellt, wobei die Vorrichtung ferner mindestens erste und zweite Führungen umfasst und die Führungen zusammen mit dem Förderband einen Kanal definieren, wobei die Führungen auf der jeweiligen Seite des scheibenartigen Produkts die scheibenartigen Produkte dazu veranlassen, in vertikaler Ausrichtung zu dem elektrostatischen Feld gehalten zu werden;
wobei mindestens entweder das Förderband oder die Führungen eine entgegengesetzte Ladung zur elektrostatischen Ladeeinheit aufweisen;
wodurch im Einsatz ein einzelner Durchlauf der Produkte durch die Vorrichtung ausreicht, um einen im Wesentlichen gleichmäßigen Auftrag des elektrostatisch geladenen Produkts auf die erste und zweite größere Oberfläche des scheibenartigen Produkts zu ermöglichen.

2. Vorrichtung nach Anspruch 1, wobei das Förderband ein "u"-förmiges Profil aufweist, wodurch eine Ausrichtung des Produkts im Verhältnis zum Förderband unterstützt wird.

3. Vorrichtung nach Anspruch 1, wobei das Förderband im Allgemeinen horizontal angeordnet ist und mindestens drei Führungen vorhanden sind, um sicherzustellen, dass scheibenartige Produkte in vertikaler Ausrichtung gehalten werden.

4. Vorrichtung nach Anspruch 1, wobei die Führungen kontinuierliche Längselemente über dem Förderband umfassen, in Übereinstimmung mit der Betriebslänge des Förderbands.

5. Vorrichtung nach Anspruch 1, wobei die Förderbandauflagefläche eine oder mehrere Förderband-, Netzband- oder geneigte Schwingungsförderer-Auflageflächen umfasst.

6. System, umfassend eine Reihe von Vorrichtungen nach einem der Ansprüche 1 bis 5.

7. Vorrichtung oder System nach einem der Ansprüche 1 bis 6, wobei die elektrostatische Produktsprüheinheit eine elektrostatische Aerosolvorrichtung umfasst, wobei die Aerosolvorrichtung einen Auslass aufweist, der so angebracht ist, dass er vor der Rolle (22) eine örtlich begrenzte Atmosphäre mit elektrostatisch geladener Pendelbewegung erzeugt, wobei ein Rastermuster für die Verteilung des Pulvers auf der Rolle (22) bereitgestellt werden kann.

8. Vorrichtung oder System nach Anspruch 7, wobei eine Vielzahl von Pulversprüh- und Elektrodenanordnungen vorhanden ist und jede Pulversprüh- und Elektrodenanordnung dabei eine bestimmte Breite der Rolle (22) abdeckt, die optional für eine Bewegung auf einem Unterrahmen montiert ist.

9. Vorrichtung oder System nach einem der Ansprüche 1 bis 8, ferner umfassend einen Orientierungsumkehrtrichter, wobei der Trichter wirkend so angeordnet ist, dass er horizontal angeordnete scheibenförmige Produkte (RH) aufnimmt, wobei der Umkehrtrichter einen Einlass (56) und einen Auslass (E) umfasst;
wobei der Einlass über eine Schwerkraftrutsche mit dem Auslass verbunden ist und eine horizontale Öffnung mit einer Breite und einer Länge aufweist, wobei die Breite und die Länge größer sind als die entsprechenden Abmessungen des scheibenförmigen Produkts, wobei die horizontale Öffnung eine Breite aufweist, wobei die Öffnung so angeordnet ist, dass sie über ihre Breite eine Neigung aufweist, wodurch ein scheibenartiges Produkt veranlasst wird, beim Durchlaufen dorthindurch und durch die Rutsche, seine Ausrichtung zu ändern, und sich am Ausgang in eine vertikale Ausrichtung (RV) zu bringen, wobei der Ausgang so ausgelegt ist, dass er eine Kanalbreite aufweist, die ausreicht, um die vertikale Ausrichtung aufrechtzuerhalten, mit einer Kanalhöhe, die ein freies Rollen oder Gleiten des scheibenartigen Produkts ermöglicht.

10. Vorrichtung oder System nach Anspruch 9, wobei der Ausgang der Rinne mit Führungselementen verbunden ist, die wirkend angeordnet sind, um sicherzustellen, dass die scheibenartigen Produkte in einer vertikalen Ausrichtung zu dem elektrostatischen Feld bleiben, wobei die Führungselemente optional elektrisch leitend sind.

11. Vorrichtung oder System nach Anspruch 10, wobei die Führungselemente erste und zweite Befestigungselemente umfassen, die eine im Allgemeinen "u"-förmige Auflage entlang des Förderbands von einem ersten Ende zu einem zweiten Ende definieren.

12. Vorrichtung oder System nach Anspruch 10 oder 11, wobei der Orientierungsumkehrtrichter F mit Seitenelementen ausgestattet ist, die wirkend so angeordnet sind, dass sie das scheibenartige Produkt in die Rinne führen.

13. Vorrichtung oder System nach einem der Ansprüche 1 bis 12, ferner umfassend eine Auslassorientierungsumkehrrinne (101), wobei die Rinne wirkend angeordnet ist, um ein vertikal ausgerichtetes scheibenförmiges Produkt (RV) zu empfangen, wobei die Auslassorientierungsumkehrrinne eine Einlassöffnung (102) und einen Auslass (103) mit einer Seitenwand auf jeder Seite der Öffnung umfasst,
wobei sich der Einlass über eine Schwerkraftrinne mit dem Auslass verbindet, und eine vertikale Öffnung mit einer Breite und einer Höhe umfasst, wobei sich die Breite entlang der Rinne erhöht und sich die Höhe der Seitenwände reduziert, und die Rinne so geformt ist, dass sich das scheibenförmige Produkt gegen eine Seitenwand nahe der Öffnung lehnen kann und eine Ausrichtung ändern kann, wenn es durch die Rinne in Richtung Auslass bewegt wird, wobei die Auslassöffnung breiter ist als das scheibenförmige Produkt, damit sich das Produkt in einer horizontalen Ausrichtung halten kann.

14. Vorrichtung nach Anspruch 13, wobei der Auslass der Auslassorientierungsumkehrrinne (101) koaxial zu der Öffnung der Auslassorientierungsumkehrrinne (101) verläuft oder wobei die Auslassorientierungsumkehrrinne (101) gewölbt ist, wodurch ein Produkt auf jede Seite des Förderbands gelenkt werden kann.

15. Verfahren zum Betreiben einer Vorrichtung (40) nach einem der vorstehenden Ansprüche 1 bis 14, zum Auftragen einer essbaren Aerosolbeschichtung auf ein scheibenartiges Süßwarenprodukt, wobei das scheibenartige Süßwarenprodukt eine erste und zweite größere Oberfläche und eine Umfangsrandfläche aufweist;
die Vorrichtung umfasst eine Förderbandauflagefläche (41, 42), eine elektrostatische Pulversprüheinheit (44, 45) und eine elektrostatische Beschichtungsausgabeeinheit, die eine Elektrode und eine Beschichtungsausgabe umfasst;
wobei das Verfahren die folgenden Schritte einschließt:
Befördern des scheibenartigen Süßwarenprodukts auf der Förderbandauflagefläche, wobei die Förderbandauflagefläche eine Auflage für eine Randfläche des Süßwarenprodukts bereitstellt, wobei die mindestens ersten und zweiten Führungen zusammen mit der Förderbandauflagefläche einen Kanal definieren, wobei die Führungen auf der jeweiligen Seite des scheibenartigen Produkts die scheibenartigen Produkte dazu veranlassen, in vertikaler Ausrichtung zu dem elektrostatischen Feld gehalten zu werden;
wobei mindestens entweder das Förderband oder die Führungen eine entgegengesetzte Ladung zur elektrostatischen Ladeeinheit aufweisen;
wodurch im Einsatz ein einzelner Durchlauf der Produkte durch die Vorrichtung ausreicht, um einen im Wesentlichen gleichmäßigen Auftrag des elektrostatisch geladenen Produkts auf die erste und zweite größere Oberfläche des scheibenartigen Produkts zu ermöglichen.

## Revendications

1. Appareil (40) destiné à distribuer un enrobage comestible en aérosol vers un produit de confiserie en forme de disque, dans lequel ladite confiserie en forme de disque présente des première et seconde surfaces principales et une surface de bord périphérique ;
ledit appareil comprenant une surface de support de convoyeur (41, 42), une unité de pulvérisation de poudre électrostatique (44, 45) et une unité de décharge d'enrobage électrostatique comprenant une électrode et un distributeur d'enrobage ;
dans lequel, lors de l'utilisation, la surface de support du convoyeur est agencée pour fournir un support à une surface de bord du produit de confiserie, l'appareil comprenant en outre au moins des premier et second guides, les guides définissant conjointement avec le convoyeur un canal, les guides de chaque côté des produits en forme de disque amènent les produits en forme de disque à être présentés dans une orientation verticale par rapport au champ électrostatique ;
dans lequel ledit au moins un parmi le convoyeur ou les guides est chargé de manière opposée par rapport à l'unité de charge électrostatique ;
ainsi, lors de l'utilisation, un seul passage des produits à travers l'appareil est suffisant pour permettre une application sensiblement uniforme du produit chargé électrostatiquement sur les première et seconde surfaces principales dudit produit en forme de disque.

2. Appareil selon la revendication 1, dans lequel le convoyeur présente un profil en forme de « U », ce qui permet de faciliter l'alignement du produit par rapport au convoyeur.

3. Appareil selon la revendication 1, dans lequel le convoyeur est disposé d'une façon générale horizontalement et il y a au moins trois guides prévus pour assurer que les produits en forme de disque sont présentés dans une orientation verticale.

4. Appareil selon la revendication 1, dans lequel les guides comprennent des éléments allongés continus au-dessus du convoyeur, en correspondance avec la longueur fonctionnelle du convoyeur.

5. Appareil selon la revendication 1, dans lequel la surface de support du convoyeur comprend une ou plusieurs parmi une courroie de convoyeur, une courroie métallique ou une surface vibratoire inclinée.

6. Système comprenant une série d'appareils selon l'une quelconque des revendications 1 à 5.

7. Appareil ou système selon l'une quelconque des revendications 1 à 6, dans lequel l'unité de pulvérisation de produit électrostatique comprend un dispositif d'aérosol électrostatique, lequel dispositif d'aérosol présente une évacuation montée pour fournir une atmosphère localisée de mouvement alternatif chargée électrostatiquement avant le rouleau (22), dans lequel un motif de trame de la distribution de poudre sur le rouleau (22) peut être fourni.

8. Appareil ou système selon la revendication 7 dans lequel se trouvent une pluralité de jets de poudre et d'ensembles électrodes, chaque jet de poudre et ensemble électrode recouvrant la largeur particulière du rouleau (22) monté éventuellement sur un châssis secondaire pour le déplacement.

9. Appareil ou système selon l'une quelconque des revendications 1 à 8, comprenant en outre un entonnoir inverseur d'orientation, l'entonnoir étant agencé de manière fonctionnelle pour recevoir un produit en forme de disque agencé horizontalement (RH), l'entonnoir inverseur comprenant une entrée (56) et une sortie (E) ;
dans lequel l'entrée est reliée à la sortie par l'intermédiaire d'une goulotte par gravité et comprend une ouverture horizontale présentant une largeur et une longueur, la largeur et la longueur étant supérieures aux dimensions correspondantes du produit en forme de disque, l'ouverture horizontale présentant une largeur, l'ouverture étant agencée de sorte qu'elle présente une inclinaison transversale sur toute l'étendue de la largeur, ce qui permet d'amener de manière fonctionnelle un produit en forme de disque à changer d'orientation lorsqu'il passe à travers celle-ci et à travers la goulotte, ce qui lui permet de s'orienter dans une orientation verticale (RV) au niveau de la sortie, la sortie étant dimensionnée de sorte qu'elle présente une largeur de canal suffisante pour maintenir l'orientation verticale, avec une hauteur de canal pour permettre le passage libre par roulement ou glissement du produit en forme de disque.

10. Appareil ou système selon la revendication 9, dans lequel la sortie de la goulotte est associée à des éléments de guidage, agencés de manière fonctionnelle pour assurer que les produits en forme de disque restent dans une orientation verticale par rapport au champ électrostatique, les éléments de guidage étant éventuellement électriquement conducteurs.

11. Appareil ou système selon la revendication 10, dans lequel les éléments de guidage comprennent des premier et second éléments de fixation qui définissent un support général en forme de « U » le long du convoyeur d'une première extrémité à une seconde extrémité.

12. Appareil ou système selon la revendication 10 ou 11, dans lequel l'entonnoir inverseur d'orientation F est muni d'éléments latéraux qui sont agencés de manière fonctionnelle de façon à guider le produit en forme de disque dans la goulotte.

13. Appareil ou système selon l'une quelconque des revendications 1 à 12, comprenant en outre une goulotte inverseuse d'orientation de sortie (101), la goulotte étant agencée de manière fonctionnelle pour recevoir un produit en forme de disque orienté verticalement (RV), la goulotte inverseuse d'orientation de sortie comprenant une ouverture d'entrée (102) et une sortie (103), avec une paroi latérale de chaque côté de l'ouverture,
dans lequel l'entrée est reliée à la sortie par l'intermédiaire d'une goulotte par gravité et comprend une ouverture verticale présentant une largeur et une hauteur, la largeur augmente le long de la goulotte et la hauteur des parois latérales se réduit et la goulotte est formée de façon à permettre au produit en forme de disque de s'appuyer contre une paroi latérale proche de l'ouverture et de changer d'orientation lorsqu'il traverse la goulotte vers la sortie, où l'embouchure de sortie est plus large que le produit en forme de disque, pour permettre au produit d'être présenté dans une orientation horizontale.

14. Appareil selon la revendication 13, dans lequel la sortie de la goulotte inverseuse d'orientation de la sortie (101) est coaxiale à l'ouverture de la goulotte inverseuse d'orientation de la sortie (101) ou dans lequel la goulotte inverseuse d'orientation de la sortie (101) est incurvée, ce qui permet que le produit puisse être dirigé de chaque côté du convoyeur.

15. Procédé d'utilisation d'un appareil (40) selon l'une quelconque des revendications 1 à 14, destiné à distribuer un enrobage comestible en aérosol vers un produit de confiserie en forme de disque, dans lequel ladite confiserie en forme de disque présente des première et seconde surfaces principales et une surface de bord périphérique ;
ledit appareil comprenant une surface de support de convoyeur (41, 42), une unité de pulvérisation de poudre électrostatique (44, 45) et une unité de décharge d'enrobage électrostatique comprenant une électrode et un distributeur d'enrobage ;
le procédé comportant les étapes suivantes :
le convoyage de ladite confiserie en forme de disque, sous l'effet de la surface de support du convoyeur, dans lequel la surface de support du convoyeur fournit un support à une surface de bord du produit de confiserie, lesdits au moins premier et second guides, conjointement avec la surface de support de convoyeur définissant un canal, les guides de chaque côté des produits en forme de disque amènent les produits en forme de disque à être présentés dans une orientation verticale par rapport au champ électrostatique ;
dans lequel ledit au moins un parmi le convoyeur ou les guides est chargé de manière opposée par rapport à l'unité de charge électrostatique ;
ainsi, lors de l'utilisation, un seul passage des produits à travers l'appareil est suffisant pour permettre une application sensiblement uniforme du produit chargé électrostatiquement sur les première et seconde surfaces principales dudit produit en forme de disque.
